# EUROPÄISCHE PATENTSCHRIFT

(11) **EP 2 505 519 B1**
(45) Veröffentlichungstag und Bekanntmachung des Hinweises auf die Patenterteilung: **07.01.2015**
(21) Anmeldenummer: 12160902.8
(22) Anmeldetag: 23.03.2012
(51) Int. Cl.: B65G 11/12, B65G 11/18, B65G 69/18

(54) **Fördereinrichtung für pulverförmiges und/oder granuliertes Gut**
Transport device for pulverulent and/or granulated material
Dispositif de transport pour matériau pulvérulent et/ou granulaire

(30) Priorität: 30.03.2011 EP 11160510
(43) Veröffentlichungstag der Anmeldung: 03.10.2012
(73) Patentinhaber: Bayer Intellectual Property GmbH, 40789 Monheim (DE)
(72) Erfinder: Ungerechts, Herbert, 47647 Kerken (DE); Frank, Hans-Jörg, 47918 Tönisvorst (DE); Hagedorn, Markus, 45481 Mülheim an der Ruhr (DE)
(74) Vertreter: BIP Patents

(56) Entgegenhaltungen:
- EP-A2- 1 550 833
- DE-A1- 4 207 333
- DE-U1- 29 917 419
- DE-U1-202005 016 035
- US-A- 5 881 780

## Beschreibung

Die Erfindung betrifft eine Fördereinrichtung für rieselfähige feinteilige Feststoffe (Schüttgut), insbesondere für pulverförmiges und/oder granulatartiges (Misch-)gut, insbesondere Kunststoffgranulat. Insbesondere ist der Gegenstand der Erfindung ein senkrecht angeordnetes und flexibel montierbares Rohr zur Förderung von vorzugsweise Polymer-Granulaten z.B. in einer Anlage zur Abfüllung von Polymer-Granulaten. Weiterhin betrifft die Erfindung eine mobile Arbeitsplattform zum Transport des Rohres.

Das bei der Herstellung thermoplastischer Kunststoffen im Reaktor anfallende grießförmige Produkt wird in einem Extruder plastifiziert und zu Einzelsträngen ausgeformt, die mittels eines im Granulierwerkzeug rotierenden Messers zu Granulaten geschnitten werden. Dieses Produkt kann in einem weiteren Schritt durch Compoundierung mit weiteren Komponenten versehen werden.

Als Compoundieren bezeichnet man in der Polymeraufbereitung die Herstellung der fertigen Kunststoff-Formmasse, dem Compound, aus den Kunststoffrohstoffen unter Zugabe von Füll- und Verstärkungsstoffen, Weichmachern, Haftvermittlern, Gleitmitteln, Stabilisatoren etc.. Die Compoundierung erfolgt überwiegend in Extrudern und umfasst die Verfahrensoperationen Fördern, Aufschmelzen, Dispergieren, Mischen, Entgasen und Druckaufbau.

Bei der Granulierung wird die Schmelze dann durch die Öffnungen einer Düsenplatte gepresst, so dass anschließend im Falle einer Stranggranulierung zunächst Schmelzestränge erzeugt werden, die dann bei der Granulierung Zylindergranulat ergeben oder aber im Falle einer Kopfgranulierung direkt am Austritt an der Düsenplatte geschnitten werden und dann Linsen- oder Kugelgranulat ergeben. Die Granulierung kann beispielsweise in einem Flüssigkeitsstrom erfolgen, der die Granulate kühlt und ein Agglomerieren weitgehend vermeidet. Anschließend wird das Granulat getrocknet und gesiebt.

Im Anschluss zur Granulierung nach der Herstellung oder nach der Compoundierung wird in der Regel das Produkt pneumatisch zu einem Silo oder Bunker gefördert. Anschließend wird den Silos oder Bunker das Schüttgut entnommen und in Container oder Silofahrzeuge gefüllt, oder es erfolgt eine Absackung des Schüttgutes in Big Bags, Oktabins oder Säcke. Bei jedem dieser Schritte können Stäube/Beläge z.B. durch Abrieb entstehen, die zusätzlich zum Schüttgut selbst dann bei einem Schüttgutwechsel eine Kontamination verursachen können.

Typische Schüttgüter sind z.B., Baustoffe, wie Oberboden, Sand, Kies, Schotter, Zement, andere mineralische Güter, wie Erz, Streusalz, und Lebensmittel, wie Getreide, Zucker, Speisesalz, Kaffee, Mehl, sowie pulverförmige Güter wie Pigmente, Füllstoffe, Granulate, Pellets usw.

Gleichzeitig wird die Forderung nach Flexibilität immer höher, so dass in einer Abfüllanlage Geräte je nach Bedarf austauschbar sind. Beispielsweise kann bei einem Schüttgut der Bedarf nach einem Sichter (Entstaubungseinheit) bestehen, um feine Partikel zu entfernen, wobei für andere Schüttgüter nur ein Förderrohr notwendig ist. Zudem sind die Investitionskosten nicht unerheblich, so dass eine flexible Lösung zum Einsatz beispielsweise eines Förderrohres an verschiedenen Orten einer Anlage ermöglicht wird.

DE 195 272 40 C1 beschreibt eine Fördereinrichtung, wobei ein Abschnitt der Förderleitung zwischen zwei starr zueinander beabstandeten Widerlagern auswechselbar angeordnet ist und der auswechselbare Förderleitungsabschnitt unter Wirkung einer Spannfeder teleskopierbar ausgebildet ist und sich die Enden der Teleskopanordnung an den Widerlagern abstützen. Nachteilig ist der konstruktionsbedingte entsprechende Aufwand für die Reinigung zur Vermeidung von Kontamination sobald ein anderer Feststoff befördert wird, insbesondere im Rohr-Flanschbereich und im Rohr-Innenverlauf.

Die Forderung nach leichter Auswaschbarkeit von Fördereinrichtungen vor dem Befördern eines anderen Schüttguttyps wird jedoch zunehmend häufiger gestellt.

Da der bisherige Stand der Technik keine hinreichende Lösung zu diesem Problem ermöglicht, war es Aufgabe der vorliegenden Erfindung, eine Fördereinrichtung bereitzustellen, das eine dichte Verbindung zwischen Schüttgut-Entnahme-Vorrichtungen und Schüttgut-Abfullvorrichtungen ermöglicht, die auf Bühnen unterschiedlicher Höhe senkrecht übereinander angeordnet sind. Dieses Schüttgut-Förderrohr sollte insbesondere an unterschiedlichen Positionen innerhalb eines Abfüllgebäudes einsetzbar sein, und zu diesem Zweck austauschbar und leicht aber dennoch sicher montierbar sein.

Die Aufgabe der vorliegenden Erfindung ist es daher, die Nachteile des Standes der Technik zu beheben.

Die gestellte Aufgabe wurde daher durch Bereitstellen einer Fördervorrichtung gelöst, die ein Förderrohr beinhaltet und die folgenden Merkmale aufweist:
a) einen Rohr-Einlaufflansch am oberen Förderrohrende und einen Rohr-Auslaufflansch am unteren Förderrohrende;
b) rotationssymmetrische Gegenflansche zu den Förderrohr-Flanschen
c) Schnellspanneinrichtungen als Rohrbefestigungen mit den rotationssymmetrischen Gegenflanschen und Aufnahmekragen zur Gewährleistung einer schnellen und dichten Verbindung der Flanschen untereinander;
d) gegebenenfalls Sensoren an einem oder beiden Flanschen des Förderrohres, mit deren Hilfe die Andockung eines Rohrendes zu einer Andockvorrichtung oder zu einem Gegenflansch durch eine sog. Initiator-Abfrage sicher erfasst werden kann;
e) gegebenenfalls Anordnung des Rohres auf einer mobilen Arbeitsplattform zum Transport des Rohres an unterschiedlichen Abfüllstellen auf der Bühne, wobei die mobile Arbeitsplattform Hebe-, Verfahr- und Schwenk-Einrichtung zur Positionierung des Rohres an unterschiedlichen Andockvorrichtungen auf einer Bühne enthält.

Die gestellte Aufgabe wurde durch Bereitstellen einer Schüttgut-Fördereinrichtung die wegen der vielfältigen Einsatzbereiche (möglichst) keine Toträume oder Fugen jeglicher Art enthalten (eg. spaltfreie Flansche an der Seite die mit Produkte in Kontakt kommt, oder schadraumfrei), in denen Feststoff-Rückstände nach Abfüllvorgängen verbleiben und nachfolgend abgefüllte Schüttgut-Partien verunreinigen könnten. Die Schüttgut-Fördervorrichtung kann (zumindest) zeitweise mit zusätzlichen Vorrichtungen kombiniert werden, die für bestimmte Einsatzzwecke erforderlich sind, wie z.B. die Hebe- oder die Bodenabdeck-Vorrichtung für die Schüttgut-Förderrohr De-/Montagen bzw. das Abdecken der Boden-Öffnungen um den vielfältigen Anforderungen für verschiedene Einsatzzwecke zu genügen.

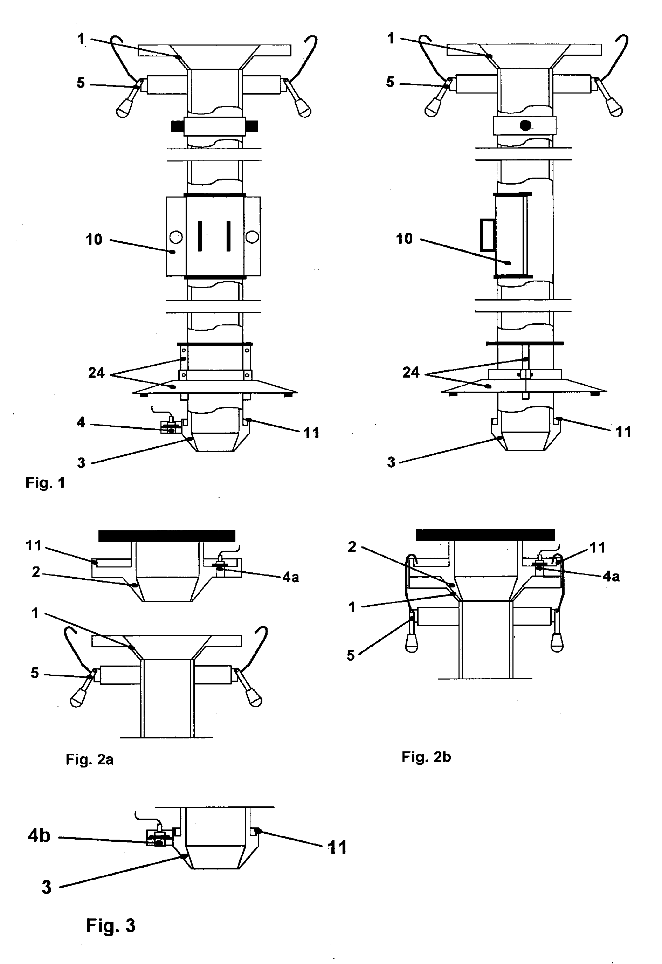

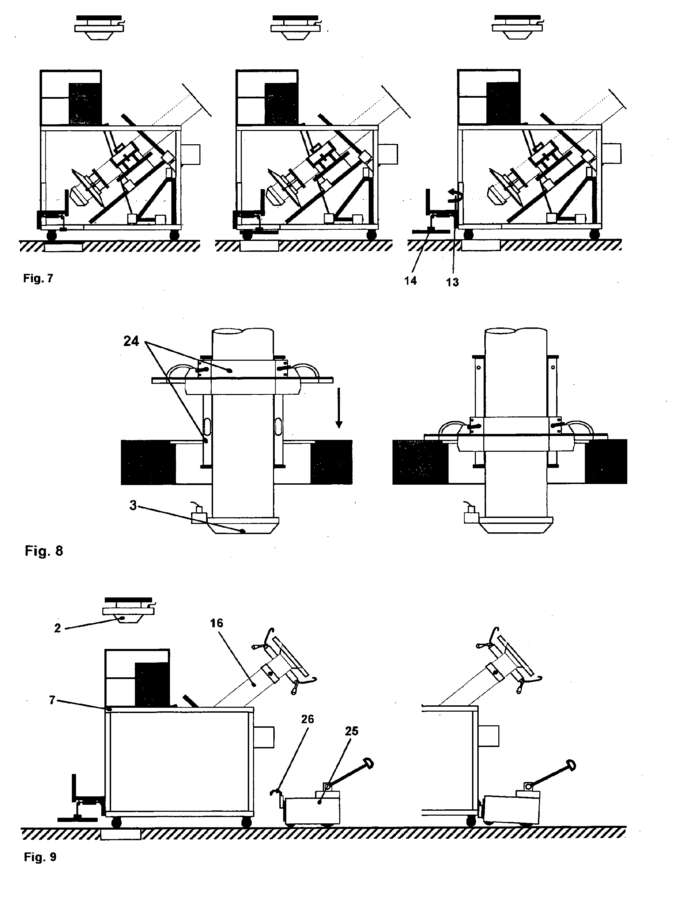

Die Merkmale des erfindungsgemäßen Schüttgut-Förderrohres werden in den Figuren 1. bis 8. veranschaulicht, ohne sie dadurch auf den Inhalt dieser Figuren einzuschränken.
**Fig. 1****.** zeigt eine Gesamtansicht des Schüttgut-Förderrohres:
**Fig. 2a** / **2b**. zeigt eine Detailansicht des Rohr-Einlaufflansches (1) mit dem räumlich darüber befindlichen Auslaufflansch (2) eines Silos, aus dem Granulat entnommen werden soll.
Fig. 2a. Schüttgut-Förderrohr nicht am Siloauslaufflansch angeschlossen ;
Fig. 2b. Schüttgut-Förderrohr ist am Siloauslaufflansch angeschlossen
**Fig**. **3**. zeigt den Rohr-Auslaufflansch (3), der mit den darunter befindlichen Abfüllanlagen verbunden werden kann:

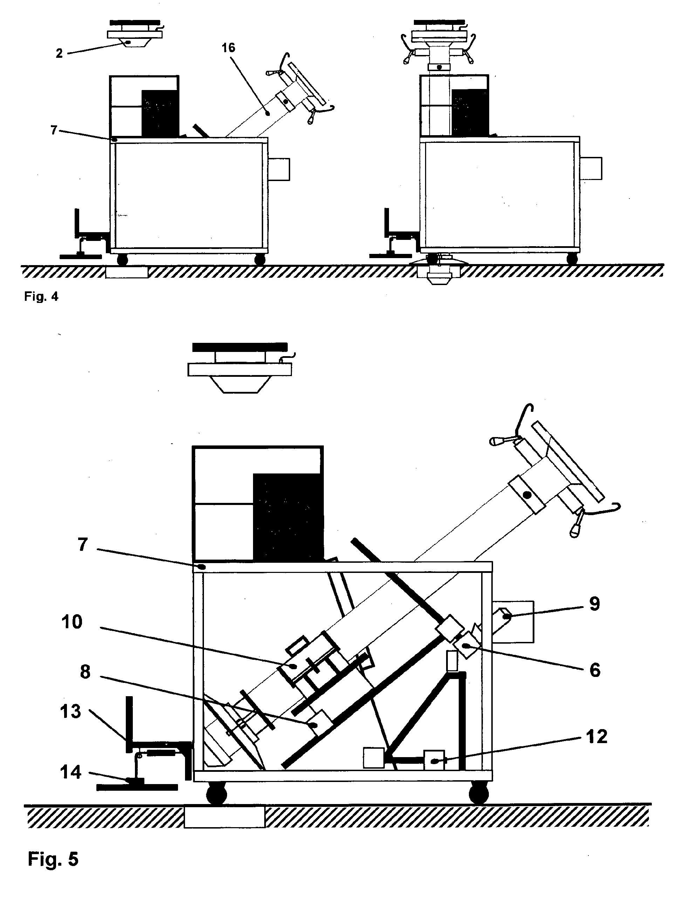

**Fig. 4**. zeigt die mobile Arbeitsplattform zum Handling des Schüttgut-Förderrohrs mit zwei Rohrpositionen
**Fig. 5**. zeigt die mobile Arbeitsplattform zum Handling des Schüttgut-Förderrohrs im Detail
**Fig**. **6**. zeigt den Vorgang der Silospülung im Zusammenhang mit dem Einsatz des Schüttgut-Förderrohrs und eines Teleskop-Spülrohrs
**Fig**. **7**. zeigt die Funktionsweise einer Bodendeckel-Hebe-Schwenkvorrichtung an der mobilen Arbeitsplattform
**Fig. 8**. zeigt die Bodenöffnungs-Abdeckung am Schüttgut-Förderohr
**Fig**. **9**. zeigt den Einsatz eines Kleinschleppers (Mover) an der mobilen Arbeitsplattform

Der Rohr-Einlaufflansch (1) und der Rohr-Auslaufflansch (3) sind bevorzugt jeweils so ausgebildet, dass sie eine bei Normaldruck staub- und wasserdichte Verbindung zu den jeweiligen Gegenflanschen entsprechender Behälter, Rohrleitungsenden oder sonstiger Andockvorrichtungen ermöglichen, wobei die Flanschverbindungen bevorzugt frei von Fugen oder Toträumen jeglicher Art sind. Dadurch kann die Kontamination von Granulat-Partien mit Fremdgranulaten aus der Abfüllung vorangegangener Granulate weitestgehend vermieden werden. Zusätzliche Dichtmaterialien für die Flansche können verwendet werden, sind aber nicht unbedingt erforderlich. Geeignete Materialien für solche Flansche sowie für das Rohr sind Kunststoff, Metall oder Stahl; bevorzugt ist Edelstahl. Die Rohrlänge ist bevorzugt auf die Höhe der Gebäude-Bühnen bzw. auf die Abstände der zu verbindenden Apparate abgestimmt. Als Zentrierhilfe und somit zur leichteren Montage sind die Flansche und Gegenflansche bevorzugt konusförmig ausgeführt. Dieser Konus ermöglicht eine schnelle Zentrierung des Flansches auf dem Gegenflansch und ermöglicht daher ebenfalls eine dichte Verbindung durch die Auflagefläche.

Die Flansche des erfindungsgemäßen Schüttgut-Förderrohres können gegebenenfalls in einer bevorzugten Ausführungsform zusätzlich Sensoren enthalten, wie der beispielhaft in Fig. 3 gezeigte Initiator (4b) oder der Initiator (4a in Fig. 2a) alternativ im Gegenflansch (2 in Fig 2a/b), die die Stellung des Flansches einer Andockvorrichtung durch eine sogenannte Initiator-Abfrage anzeigen und somit einen korrekten Andockvorgang automatisiert sicher erkennen lassen. Solche Initiatoren sind handelsübliche Geräte und werden beispielsweise unter der Bezeichnung NCB15-30GM40-N0-V1. von der Fa. Pepperl und Fuchs vertrieben.

Das erfindungsgemäße Schüttgut-Förderrohr ist zur Befestigung der Flansch-Verbindungen untereinander zumindest an dem Rohr-Einlaufflansch, gegebenenfalls auch an beiden Rohrenden mit Rohrbefestigungs-Vorrichtungen versehen, die das Schüttgut-Förderrohr in seiner ArbeitsPosition fixieren und die für einen ausreichend hohen Anpressdruck der Flansch-Verbindungen untereinander sorgen. Solche Rohrbefestigungs-Vorrichtungen können z.B. Schnellspanneinrichtungen (5) sein, wie beispielhaft in Fig. 1. und 2. am Rohr-Einlaufflansch (1) dargestellt. Solche Schnellspanneinrichtungen sind schnell und flexibel zu handhaben und daher vorteilhaft für das erfindungsgemäße Schüttgut-Förderrohr, das darüber hinaus auch ortsbeweglich sein muss. Die Schnellspanneinrichtung wird an einem Gegenflansch mit einem rotationssymmetrischen Aufnahmekragen (11) eingehakt, wodurch die Schnellspanneinrichtungen aus allen Richtungen durch einfaches Auflegen des Hakens und Umlegen des Hebels befestigt werden können. Dieser Aufnahmekragen (11) besitzt der Rohr-Auslaufflansch (3) ebenso wie der Auslaufflansch (2) des Silos. Schnellspanneinrichtungen sind handelsübliche Geräte und werden beispielweise unter der Bezeichnung 351-R von der Fa. Destaco vertrieben.

Als Schnellspanner oder Schnellspanneinrichtung werden Klemmvorrichtungen bezeichnet, die sich schnell und meist ohne Werkzeug von Hand lösen oder festsetzen (spannen) lassen.

Oft arbeitet ein Schnellspanner mit einem Exzenter, der durch einen Hebel betätigt wird. Beim Spannvorgang wird der Exzenter etwas über den Druckpunkt hinausgeschwenkt und mechanisch angeschlagen. Dadurch entsteht Selbsthemmung und der Schnellspanner kann sich nicht mehr von selbst öffnen.

Das erfindungsgemäße Schüttgut-Förderrohr ist aufgrund seiner Abmessungen und seines Eigengewichtes in der Regel nicht ohne weiteres manuell handhabbar, insbesondere nicht während den Andock-Manövern, die eine hohe Präzision erfordern. Um diese Handhabung zu erleichtern, wird das Schüttgut-Förderrohr in einer bevorzugten Ausführungsform mit Hilfe einer mobilen Arbeitsplattform in die gewünschte Arbeitsposition gebracht, wie beispielhaft in **Fig. 4**. schematisch dargestellt.

Diese Arbeitsplattform, die mehrere Arbeitsebenen aufweisen kann, ist beispielhaft in **Fig. 5**. genauer beschrieben:
Die erfindungsgemäße Arbeitsplattform ist dazu geeignet, das Schüttgut-Förderrohr aus einer senkrechten Position (z.B. einer Wandhalterung oder einer sonstigen senkrecht angeordneten Ablage) zu entnehmen, mit einer geeigneten Schwenk-Vorrichtung (6) und Verfahr-Einrichtung (12) nahe der Arbeitsplattform (7) zu positionieren und in Kombination mit einer geeigneten HebeVorrichtung (8) in die gewünschte Arbeitsposition zu bringen. Da diese Arbeitsplattform verfahren werden kann, lässt sich auf diese Weise das Schüttgut-Förderrohr sehr flexibel an unterschiedliche Abfüll-Position montieren. Die Hebe-, Verfahr- und Schwenk-Vorrichtungen können in einer bevorzugten Ausführungsform mechanisch beispielsweise durch elektrische Antriebe (9) unterstützt werden. Ebenso kann die gesamte Arbeitsplattform vorzugsweise durch elektrische, gegebenenfalls ortsbewegliche Antriebe bewegt werden. Ortsbewegliche, d.h. eigenständig verfahrbare vom Transportgut entkoppelbare Antriebe haben den Vorteil, dass Sie für unterschiedliche Transportaufgaben eingesetzt werden können. Dieser sogenannte Kleinschlepper oder Mover (25) läßt sich mit einem Hubwerk inkl. zwei Adaptionsausleger (26) an den Rahmen der Arbeitsplattform form- und reibschlüssig verbinden. Somit kann der Bediener über ein angetriebenes drehbares Bodenrad des Movers die Arbeitsplattform beschleunigen, abbremsen und lenken, wie in Fig. 9 dargestellt. Es können aber auch fest mit der Arbeitsplattform verbundene Antriebe verwendet werden.

Zur Positionierhilfe der Arbeitsplattform unterhalb eines Silos werden in einer bevorzugten Ausführungsform drei Positionslaser eingesetzt, die zwei oder mehr, bevorzugt drei, Lichtpunkte auf den Boden werfen. Bei einer korrekten Positionierung befinden sich die Lichtpunkte in einem genau definierten Bereich, beispielsweise auf dem runden Bodendeckelrand.

Die Verfahr, Schwenk- und Hebe-Vorrichtungen der Arbeitsplattform greifen dabei in einer bevorzugten Ausführungsform in Rohraufnahme-Vorrichtungen (10), wie in **Fig.1**. dargestellt, die direkt am Schüttgut-Förderrohr angebracht sind, um es sicher handhaben zu können.

Zur weiteren Arbeitssicherheit wird in einer weiteren bevorzugten Ausführungsform für das Öffnen des Bodendeckels (wenn vorhanden) zur Absicherung der Bodenöffnung eine separate Hebe-Schwenkvorrichtung (13) beispielsweise mit elektrischem Lastmagnet (14) eingesetzt. Der Arbeitsvorgang der Bodendeckelentnahme bzw. des Bodendeckeleinsetzens wird mit einer Absturzsicherung durchgeführt. Die Absturzsicherung besteht aus einem schwenkbaren Geländer, welches elektromechanisch gegen Öffnen gesichert ist und nur dann über einen Initiator freigegeben wird, wenn keine Absturzgefahr besteht. Ein Initiator erkennt dazu die Bodenöffnung mittels Lichtabtastung. Die Initiatoren sind handelsübliche Geräte.

So ist bevorzugt eine Deckelhebe-Vorrichtung (13 mit 14) mit der mobilen Arbeitsplattform für das Schüttgut-Förderrohr fest verbunden, mit deren Hilfe vorhandene Deckel in Bodenöffnungen von Gebäudebühnen angehoben und gegebenenfalls bei Seite gelegt werden können, damit das Schüttgut-Förderrohr durch die frei gewordene Bodenöffnung hindurch geführt werden kann. Die Deckelhebe-Vorrichtung (13 mit 14) ist dabei so in die mobile Arbeitsplattform integriert, dass der Hebemechanismus direkt unter dem Rohr-Auslaufflansch wirksam wird. Die Konstruktion und Funktionsweise einer solchen Deckelhebe-Vorrichtung wird durch die **Fig**. **7**. veranschaulicht.

Diese Deckelhebe-Vorrichtung (13 mit 14) kann grundsätzlich auch als separate, gegebenenfalls mobile Vorrichtung verwendet werden.

In einer weiteren Ausführungsform ist das Schüttgut-Förderrohr (16) fest mit einer Bodenöffnungs-Abdeckung (24) verbunden, die die Absturzgefahr für Personen oder Gegenstände in die verbleibende z.B. kreissegmentförmige Bodenöffnung nach Einführen des Schüttgut-Förderrohres durch die z.B. kreisrunde Bodenöffnung der Gebäudebühne verhindern soll. Zudem wird ein Abstürzen des Schüttgut-Förderrohres durch die Bodenöffnung verhindert, falls die Ankopplung an dem Silo-Auslaufflansch (2) nicht oder nicht korrekt durchgeführt wurde. Die **Fi**g**.1**. zeigt eine solche Bodenöffnungs-Abdeckung (24) schematisch; in **Fig. 8****.** ist sie anschaulich (24) dargestellt.

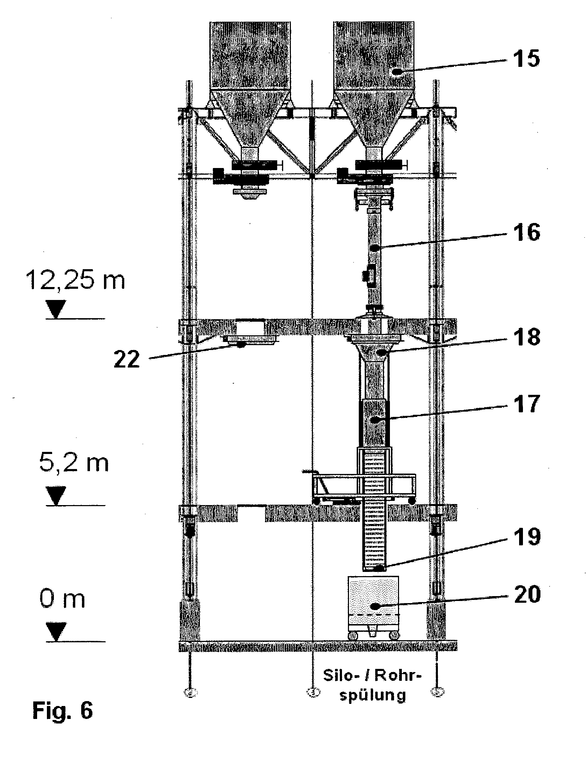

Ein typischer Arbeitsvorgang, der durch das erfindungsgemäße Schüttgut-Förderrohr wirkungsvoll unterstützt wird, wird nachfolgend am Beispiel der Silo-Spülung erläutert, wie beispielhaft in **Fig.** 6. skizziert.

Hier wird beispielsweise ein entleertes aber zuvor Schüttgut-führendes Silo (15) mit einem starren Schüttgut-Förderrohr (16) durch Schnellspanneinrichtungen (5) verbunden und dessen Rohr-Auslaufflansch (3) in ein Trichter (18) eines Teleskop-Spülrohres (17) endet. Das Teleskopspülrohr wird durch das Andocken des Trichters (18) auf einen Deckenzentrierring (22) positioniert und zur Decke hin abgedichtet. Der Auslaufflansch (19) des Teleskopspülrohres (17) reicht bis in einem Auffangfilterwagen (20) für Spüllösungen. Über das Silo (15) kann nun der Spülprozess vorzugsweise mit reinem Wasser beginnen, das im untersten Filterwagen (20) als Spüllösung aufgefangen wird. Auf diese Weise lässt sich über eine Distanz von drei Gebäude-Bühnen hinweg eine stabile aber dennoch schnell und flexibel montierbare Rohrverbindung installieren, die den Dichtheits-Anforderungen genügt und das Spülwasser sicher und ohne Leckagen in einen Filterwagen (20) auf der untersten Gebäudebühne ableitet. Hieraus fließt das Spülwasser über eine Fläche in einen Abwasserkanal mit Granulatabscheider.

## Patentansprüche

1. Fördervorrichtung, die ein Förderrohr (16) beinhaltet, **dadurch gekennzeichnet, dass**
a) ein Rohr-Einlaufflansch (1) am oberen Förderrohrende und ein Rohr-Auslaufflansch (3) am unteren Förderrohrende,
b) rotationssymmetrische Gegenflansche an den entsprechenden Behältern, Rohrleitungsenden oder sonstigen Andockvorrichtungen zu den Förderrohr-Flanschen (1, 3),
c) Schnellspanneinrichtungen (5) als Rohrbefestigungen mit den rotationssymmetrischen Gegenflanschen und Aufnahmekragen (11) am Gegenflansch
vorhanden sind.

2. Fördervorrichtung gemäß Anspruch 1 **dadurch gekennzeichnet, dass** die Vorrichtung totraumfreiausgeführt wird.

3. Fördervorrichtung gemäß Anspruch 1 oder 2 **dadurch gekennzeichnet, dass** Sensoren (4a, 4b) an einem oder beiden Flanschen (1, 2) des Förderrohres vorhanden sind, mit deren Hilfe die Andockung eines Rohrendes zu einer Andockvorrichtung oder zu einem Gegenflansch durch eine sog. Initiator-Abfrage sicher erfasst werden kann.

4. Fördereinrichtung gemäß einem der Ansprüche 1 bis 3, **dadurch gekennzeichnet, dass** das Rohr auf einer mobilen Arbeitsplattform (7) zum Transport des Rohres an unterschiedliche Abfüllstellen auf der Bühne angeordnet ist, wobei die mobile Arbeitsplattform Hebe-, Verfahr- und Schwenk-Einrichtung zur Positionierung des Rohres an unterschiedlichen Andockvorrichtungen auf einer Bühne enthält.

5. Fördervorrichtung gemäß Anspruch 4 **dadurch gekennzeichnet, dass** die Hebe-, Verfahr- und Schwenk-Vorrichtungen durch elektrische Antriebe (9) unterstützt werden.

6. Fördervorrichtung gemäß Anspruch 4 oder 5 **dadurch gekennzeichnet, dass** die Arbeitsplattform (7) vorzugsweise durch elektrische, gegebenenfalls ortsbewegliche Antriebe (25) bewegt wird.

7. Fördereinrichtung gemäß einem der Ansprüche 4 bis 6, **dadurch gekennzeichnet, dass** das Ausheben eines Bodendeckels über eine separate Hebe-Schwenkvorrichtung (13) erfolgt und zur Absicherung der Bodenöffnung ein Schwenkgeländer eingesetzt wird.

8. Fördereinrichtung gemäß Anspruch 7, **dadurch gekennzeichnet, dass** das Schwenkgeländer elektromechanisch verriegelt wird und nur über einen Lichttaster, der eine Bodenöffnung erkennt, freigegeben wird

9. Fördereinrichtung gemäß einem der Ansprüche 4 bis 8 **dadurch gekennzeichnet, dass** die gemeinsame Lage der Lichtpunkte von Positionslasern, einen Positioniervorgang der Arbeitsplattform unterstützt

10. Fördereinrichtung gemäß einem der Ansprüche 1 bis 7, **dadurch gekennzeichnet, dass** Schüttgut-Förderrohr (16) fest mit einer Bodenöffnungs-Abdeckung (24) verbunden ist.

11. Verwendung einer Fördereinrichtung gemäß einem der Ansprüche 1 bis 10 zur Förderung von Schüttgut.

12. Verwendung einer Fördereinrichtung gemäß Anspruch 11 zur Förderung von Polycarbonat-Granulat

## Claims

1. Conveying device containing a conveying pipe (1b), **characterized in that**
a) a pipe inlet flange (1) on the upper conveying pipe end and a pipe outlet flange (3) on the lower conveying pipe end,
b) rotationally symmetric counter flanges on the corresponding containers, pipeline ends or other docking devices to the conveying pipe flanges (1, 3),
c) rapid-action clamping devices (5) as pipe fastenings having the rotationally symmetric counter flanges and receiving collars (11) on the counter flange
are present.

2. Conveying device according to Claim 1, **characterized in that** the device is constructed with no dead space.

3. Conveying device according to Claim 1 or 2, **characterized in that**, on one or both flanges (1, 2) of the conveying pipe, sensors (4a, 4b) are present, by means of which the docking of a pipe end to a docking device or to a counter flange can be reliably detected by virtue of a so-called initiator query.

4. Conveying device according to one of Claims 1 to 3, **characterized in that** the pipe is disposed on a mobile work platform (7) for the transport of the pipe to different filling sites on the stage, the mobile work platform containing lifting, transporting and pivoting devices for positioning of the pipe at different docking devices on a stage.

5. Conveying device according to Claim 4, **characterized in that** the lifting, transporting and pivoting devices are supported by electric drives (9).

6. Conveying device according to Claim 4 or 5, **characterized in that** the work platform (7) is preferably moved by electric, where necessary movable drives.

7. Conveying device according to one of Claims 4 to 6, **characterized in that** the raising of a ground cover is realized by a separate lifting-pivoting device (13) and, for the protection of the floor opening, a pivoting guard rail is used.

8. Conveying device according to Claim 7, **characterized in that** the pivoting guard rail is locked by electromechanical means and is released only by means of a light scanner which identifies a floor opening.

9. Conveying device according to one of Claims 4 to 8, **characterized in that** the common position of the light spots of positioning lasers supports a positioning operation of the work platform.

10. Conveying device according to one of Claims 1 to 7, **characterized in that** the bulk material conveying pipe (16) is fixedly connected to a floor opening cover (24) .

11. Use of a conveying device according to one of Claims 1 to 10 for the conveyance of bulk material.

12. Use of a conveying device according to Claim 11 for the conveyance of polycarbonate granulate.

## Revendications

1. Dispositif de transport présentant un tube de transport (16), **caractérisé en ce que**
a) une bride d'entrée de tube (1) est prévue à l'extrémité supérieure du tube de transport et une bride de sortie de tube (3) est prévue à l'extrémité inférieure du tube de transport,
b) des brides conjuguées à symétrie de révolution sont prévues sur les récipients correspondants, des extrémités de conduites tubulaires ou d'autres dispositifs d'arrimage aux brides de tube de transport (1, 3),
c) des dispositifs de serrage rapide (5) sont prévus en tant que fixations tubulaires aux brides conjuguées à symétrie de révolution et aux collets de réception (11) au niveau de la bride conjuguée.

2. Dispositif de transport selon la revendication 1, **caractérisé en ce que** le dispositif est réalisé sans espaces morts.

3. Dispositif de transport selon la revendication 1 ou 2, **caractérisé en ce que** des capteurs (4a, 4b) sont prévus au niveau d'une ou des deux brides (1, 2) du tube de transport, à l'aide desquels l'arrimage d'une extrémité de tube à un dispositif d'arrimage ou à une bride conjuguée peut être détecté de manière sûre en interrogeant un "initiateur".

4. Dispositif de transport selon l'une quelconque des revendications 1 à 3, **caractérisé en ce que** le tube est disposé sur une plate-forme de travail mobile (7) en vue du transport du tube à différents points de remplissage sur la plate-forme, la plate-forme de travail mobile présentant des dispositifs de levage, de déplacement et de pivotement pour le positionnement du tube au niveau de différents dispositifs d'arrimage sur une plate-forme.

5. Dispositif de transport selon la revendication 4, **caractérisé en ce que** les dispositifs de levage, de déplacement et de pivotement sont assistés par des entraînements électriques (9).

6. Dispositif de transport selon la revendication 4 ou 5, **caractérisé en ce que** la plate-forme de travail (7) est déplacée de préférence par des entraînements électriques, éventuellement mobiles (25).

7. Dispositif de transport selon l'une quelconque des revendications 4 à 6, **caractérisé en ce que** le soulèvement d'un couvercle de fond s'effectue par le biais d'un dispositif de levage et de pivotement séparé (13) et une balustrade pivotante est utilisée pour sécuriser l'ouverture dans le fond.

8. Dispositif de transport selon la revendication 7, **caractérisé en ce que** la balustrade pivotante est verrouillée de manière électromécanique et n'est libérée que par le biais d'un détecteur photoélectrique qui reconnaît une ouverture dans le fond.

9. Dispositif de transport selon l'une quelconque des revendications 4 à 8, **caractérisé en ce que** la position commune des points lumineux de lasers de positionnement assiste une opération de positionnement de la plate-forme de travail.

10. Dispositif de transport selon l'une quelconque des revendications 1 à 7, **caractérisé en ce que** le tube de transport de produits en vrac (16) est connecté fixement à un recouvrement de l'ouverture dans le fond (24).

11. Utilisation d'un dispositif de transport selon l'une quelconque des revendications 1 à 10 pour le transport de produits en vrac.

12. Utilisation d'un dispositif de transport selon la revendication 11 pour le transport de granulés de polycarbonate.
